(19) Europäisches Patentamt

European Patent Office

Office européen des brevets

(11) **EP 1 696 216 A1**

(12) **EUROPEAN PATENT APPLICATION**

(43) Date of publication:
**30.08.2006 Bulletin 2006/35**

(51) Int Cl.:
***G01L 3/00*** *(2006.01)*    ***G01L 3/10*** *(2006.01)*
***G01L 3/14*** *(2006.01)*    ***G01L 5/00*** *(2006.01)*

(21) Application number: **05101460.3**

(22) Date of filing: **25.02.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(71) Applicant: **ABB AB
721 83 Västeras (SE)**

(72) Inventor: **Brogårdh, Torgny
72479 Västerås (SE)**

(74) Representative: **Reyier, Ann-Mari et al
Bjerkéns Patentbyra KB,
Box 128
721 05 Västeras (SE)**

(54) **Method and device for measuring torque in a robot**

(57)    A device for determining torque on a rotating shaft (14b) in an industrial robot, wherein the shaft is mounted in at least one bearing (13c). The device comprises a sensor arrangement (24a-b) for measuring the force between the bearing and its surroundings (25), and a measuring unit adapted to receive measurements from said sensor arrangement and on basis thereof calculate the torque on the shaft.

Fig. 1

**Description**

FIELD OF THE INVENTION AND PRIOR ART

The present invention relates to a method for determining torque on a rotating shaft mounted in at least one bearing in an industrial robot. The invention also relates to a device for determining torque on a rotating shaft in an industrial robot.

An industrial robot comprises at least two arms rotatable relative each other about a joint comprising a plurality of rotating shafts in a gear train. It is possible to drastically increase the stiffness and control robustness of the robot arm by model-based control if the torque transmitted by the gear train is measured and fed back to the control system of the robot. For this purpose the torque on the outgoing shaft of the gear train should be measured. It is known to measure torques on rotating axis by means of an axis toque sensor. However, axis torque sensors have a number of drawbacks. They are expensive, they need slip rings or inductive transmission, which makes them complicated, if the axis is of multi turn type they need extra space, which increases the width of the robot, they are difficult to exchange after a fault situation and they need cabling on the rotating side of the gear, which due to the wear have a short life.

OBJECTS AND SUMMARY OF THE INVENTION

The object of the present invention is to provide a solution, which reduces the problems above and thus accomplish a cost efficient and convenient way to measure the torque transmitted to the shaft by the gear train in an industrial robot.

According to one aspect of the invention this object is achieved by a method as defined in claim 1. According to the invention, instead of measuring the torque on the shaft, the force on the bearing of the shaft is measured and the torque on the shaft is calculated based on the measured bearing force. With the surroundings is meant the mechanical support structure on which the motor driving the shaft is mounted. For example, the shaft is mounted in a joint in the robot and the surroundings is a robot arm.

In the first stage in a gear train, the forces between the gear wheels are well defined by the transmitted torque and therefore both the direction and magnitude of the forces between the gear wheels are well defined to obtain a force signal proportional to the axis torque. For example, the sensor is mounted between the bearing and a bearing support structure of the robot arm. Mounting a force sensor between the bearing and its surroundings is a simple mechanical task. A force sensor is cheap, no rotary transmission is needed, minimal extra space is needed, and cabling will be on the fixed side of the gear.

Preferably, the force on the bearing of an input shaft to the gear train is measured. This is advantageous since a small force sensor can be used thanks to the fact that the torque on the input shaft is less than the torque on the other shafts in the train. Other advantages achieved are easier ripple compensation and the mounting of the sensor in certain types of gears is simplified.

According to an embodiment of the invention the rotating shaft is mounted in at least two bearings and the method comprises: measuring the forces between the both the bearings and there surroundings, and calculating the torque on the shaft based on the sum of the measured forces on the first and second bearing.

According to an embodiment of the invention said bearing comprises a rotating part connected to the rotating shaft and a static part connected to the surroundings, and the force is measured between the static part of the bearing and the surroundings. This embodiment simplifies the mounting of the sensors.

According to an embodiment of the invention, the first rotating shaft is connected to a second shaft through a gear, and the method comprises calculating the torque on the second shaft based on the calculated torque on the first shaft and the gear ratio of said gear. This embodiment makes it possible to measure the force on the bearings of one of the shafts in the gear train and to calculate the torque on a second shaft connected to the first shaft based on the measurement and the gear ratio.

According to an embodiment of the invention the method comprises measuring the forces on two different locations, preferably on or in connection to the static part of the bearing, wherein the locations are selected such that the friction force components from the bearing in the locations are in opposite directions, and calculating the mean value of said measured forces for the two locations, and on basis thereof calculating the torque on the shaft. By this embodiment the contribution on the measurement due to rotational friction in the bearing is compensated for.

According to an embodiment of the invention the method comprises measuring the force on two locations, preferably on or in connection to the static part of the bearing, wherein the locations are selected such that forces from the bending torque around the shaft in the two locations are in opposite directions, and calculating the mean value of said measured forces for the two locations, and on basis thereof calculating the torque on the shaft. By this embodiment the contribution on the measurement due to bending torque on the shaft is compensated for.

According to an embodiment of the invention the rotating shaft is connected to a motor and to a second shaft through a gear, and the method comprises identifying and storing the amplitudes of the torque ripple from the gear as a function of the motor angle, measuring the motor angle, determining the amplitude of the torque ripple from the gear based on the measured motor angle and the stored amplitudes of the torque ripple, and calculating a compensated torque on the shaft based on the amplitude of the torque ripple. By compensating for the torque ripple from the gear, the motor control is improved, since the control becomes more even.

The rotating shaft is preferably connected to a motor controlled by a control loop, and the method comprises generating a torque feedback signal to the control loop based on the calculated torque.

According to an embodiment of the invention the rotating shaft is connected to a motor and the method comprises calculating the torque on the motor based on angular values from the motor, the calculated torque on the shaft and a dynamic robot model, comparing the calculated torque on the motor with a torque reference signal to the motor, and on basis thereof determining faults in the motor, the gear or the robot mechanics. This embodiment makes it possible to detect faults at an early stage.

According to a further aspect of the invention, the object is achieved by a computer program directly loadable into the internal memory of a computer or a processor, comprising software code portions for performing the steps of the method according to the invention, when said program is run on a computer. The computer program is provided either on a computer readable medium or through a network.

According to another aspect of the invention, the object is achieved by a computer readable medium having a program recorded thereon, when the program is to make a computer perform the steps of the method according to the invention, and said program is run on the computer.

According to another aspect of the invention the object is achieved by a device as defined in claim 13. Preferably, the force sensor is mounted on the bearing of an input shaft to a gear train of a joint in the robot. The force sensor is for example a strain gauge bridge on a suitable support structure.

According to an embodiment of the invention the sensor arrangement comprises a beam mounted between the static part of the bearing and the surroundings and a sensor for measuring the bending or stress of the beam. This sensor arrangement is simple and cheep.

According to an embodiment of the invention the bearing is mounted in a bearing holder and that said sensor arrangement is mounted between the bearing holder and the surroundings. Thus, the mounting of the sensor is simplified.

BRIEF DESCRIPTION OF THE DRAWINGS

The invention will now be explained more closely by the description of different embodiments of the invention and with reference to the appended figures.

Fig. 1          shows an example of an industrial robot suitable for the invention.

Fig. 2          shows an example of a drive system for a joint of the robot in figure 1.

Fig. 3          shows the forces acting on one stage in a gear train of the drive system in figure 2.

Fig. 4          shows how the force sensor can be mounted according to different embodiments of the invention.

Figs. 5a-b    show different examples of how the mounting of the force sensor can be made.

Fig. 6          shows how four force sensors can be used to compensate for forces from the bearing friction and from bending of the shaft.

Fig. 7          shows an example of how the force sensors in figure 6 can be implemented.

Fig. 8          shows how the force sensors can be connected to the robot controller.

Fig. 9          shows how a torductor can be mounted on one of the shafts as an alternative to the indirect torque measurement with force sensors.

Fig. 10        shows torductor properties.

DETAILED DESCRIPTION OF PREFERRED EMBODIMENTS OF THE INVENTION

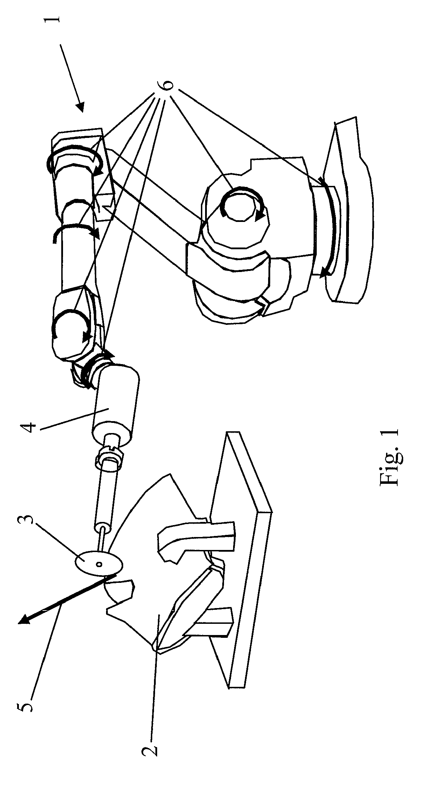

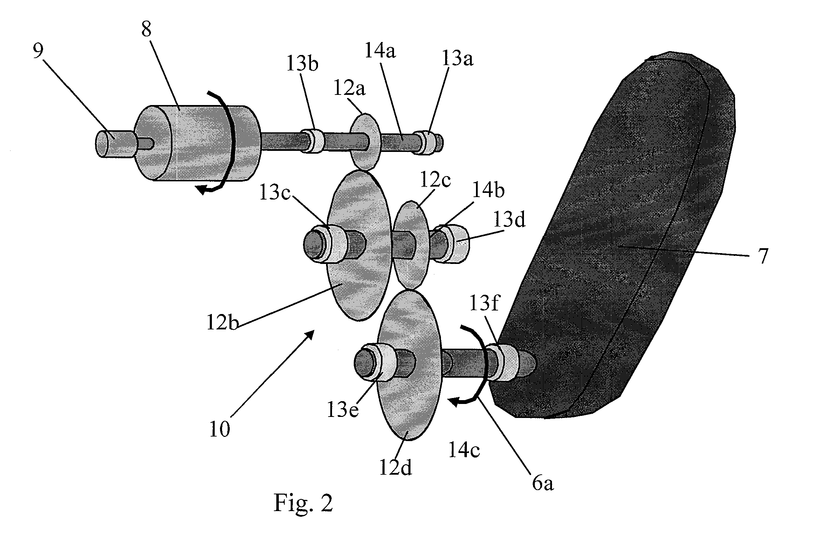

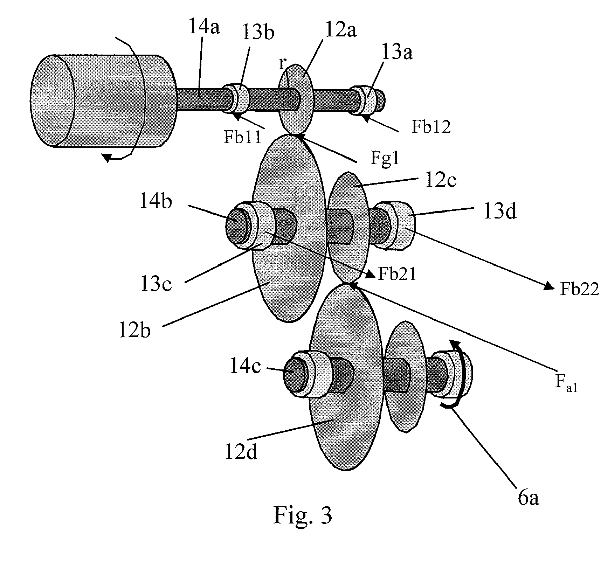

Figure 1 shows a situation in which indirect torque measurements will make it possible to increase the performance of the process supported by the robot. The robot in this case includes six rotational joints 6 and makes grinding on a work object 2 by means of a grinding disc 3 rotating with power from a spindle 4. During the grinding process the grinding disc 3 will exert a force 5 on the work object 2, and this force has to be counter acted by actuated joint torques of the robot, illustrated by arrows in the figure. Robots used in industry today makes use only of encoders or resolvers on the motor shafts to control the joints and the disturbance torques, generated by the tool forces on the joints, must build up a motion of the motor shafts via the joint gear stages, before the encoder or resolver can give a measurement useful for the controller to compensate for the tool generated joint torques. This means that the bandwidth of the servo with respect to tool forces will be low and the robot will be compliant and allow vibration to build up.

Figure 2 shows a typical drive system 10 for one of the joints 6 of the robot shown in Figure 1, comprising a gear train having three stages. A rotor 8 of a motor, which controls the angle of an attached robot arm 7, generates a joint torque 6a. Between the arm 7 and the rotor 8 there is a gear train, or a planetary gear structure, to obtain a ratio (typical 30 - 400) between the motor and the arm movements. The rotor angle is measured with an angle measurement sensor 9, such as an encoder or a resolver. The gear train comprises gear wheels 12a - d, shafts 14a - c, and bearings 13a - f. The gear wheels 12b and 12c are mounted on the same shaft 14b. Each shaft is provided with two bearings.

To be able to counteract the disturbance torque from the arm 7 as generated by for example the grinding disc in Figure 1, it is well known to use a torque sensor mounted on one of the shafts 14a - c in the gear train between the arm 7 and the rotor 8, whereby the servo can react faster on the disturbance than in the normal case, when only an angle measurement sensor 9 on the rotor shaft is used. However, a torque sensor must be mounted on the rotating shaft and either the cabling has to follow the rotating movements which results in life time problems, or expensive rotating transformers for transmitting both the power to the sensors and the measurement signals from the sensors must be used.

Figure 3 shows some of the forces acting on the gear train of figure 2. Thus, a force Fg1 acts on the gear wheel 12a giving the forces Fb11 and Fb12 on the bearings 13b and 13a. Force balance will give:

$$Fb11 + Fb12 = Fg1$$

The torque T1 on the shaft 14a is calculated as:

$$T1 = Fg1 * r1 = (Fb11 + Fb12) * r1$$

where r1 is the radius of the gear wheel 12a.

Thus, if the forces Fb11 and Fb12 are measured, the shaft torque T1 can be calculated and used for torque control and torque supervision.

For the shaft 14b with the bearing forces Fb21 and Fb22 on the bearings 13c and 13d, force and torque balance will give the following relations:

$$Fg1 + Fa1 = Fb21 + Fb22$$

where Fa1 is the force from the third gear stage and

$$Fg1 * r2 = Fa1 * r3$$

where r2 and r3 are the radie of the gear wheels 12b and 12c.

And thus:

$$Fg1+Fg1*(r2/r3)=Fb21+Fb22$$

And by measuring the forces on the bearings 13c and 13d the torque on for example shaft 14a can be calculated as:

$$T1=Fg1*r1= (Fb21+Fb22)*r1/(1+r2/r3)$$

and the torque T2 on the shaft 14b as:

$$T2 = Fg1*r2=(Fb21+Fb22)*r2/(1+r2/r3)$$

It should be mentioned that the same relations hold also if the gear wheels are mounted for example an angle of 90 degrees in relation to each other as is often the case in a robot wrist.

This means that a torque disturbance added to the joint torque 6a will directly give a change in the force Fa1 and then also a change in the forces Fb21 and Fb22 or Fb11 and Fb12. Now, the invention is to make use of the forces Fb21 and Fb22, or only one of these forces, to indirectly measure the joint torque 6a. The main advantages with this are that 1) the bearing forces can be measured on the static (non rotating part) of the bearing with a low cost standard force sensor, 2) no electric or electromagnetic transmission is needed between the rotating shaft and the force sensor, 3) no special shaft with an integrated rotating torque sensor is needed, 4) the shaft length does not need to be increased and 5) easy to mount a force sensor as an option on a gear train.

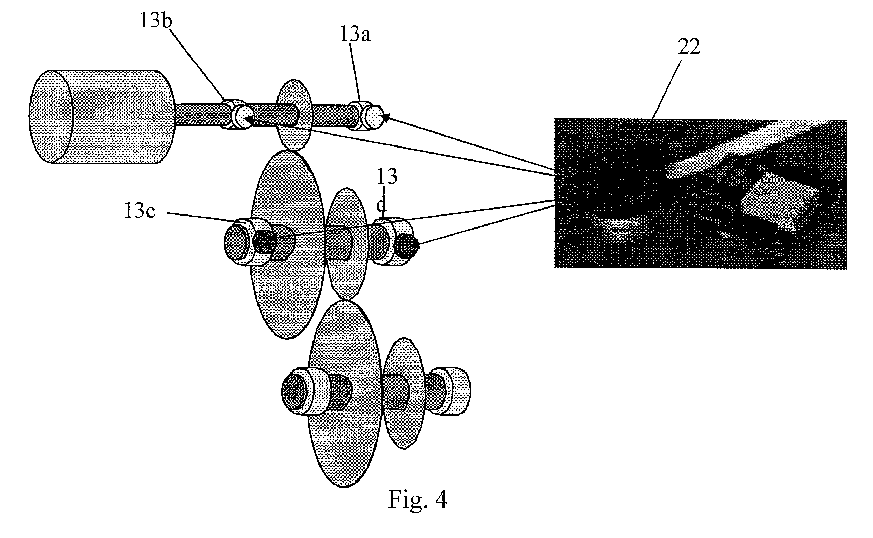

Figure 4 shows examples of how a force sensor 22 can be mounted either on the bearings 13c and 13d to measure the forces Fb21 and Fb22, or be mounted on the bearings 13a and 13b to measure the corresponding forces Fb11 and Fb12 on these bearings. The force directions on the bearings are given by the tangent of gear wheels at the contact point between the gears and are well defined, and to obtain highest signal to noise ratio the force sensor should be mounted to have its highest sensitivity in this direction.

Because of moving contact point on the gear teeth, the force on the bearings will have a ripple. However, this ripple is well defined as a function of the rotation angle of the gear wheel and can be compensated for before the force signal is used in the servo loop for torque control. For example, the torque ripple can be identified by making a least square fit between measured force variations and a sine function of the gear wheel angle, which in turn is a function of motor angle. The force sensors could also be mounted on the bearings of the shaft attached to the arm, but in this case more sensors are used to compensate for the not well-defined bending torques on the shaft. If necessary, the force sensor can be calibrated to the motor torque at different torque levels, for example by running the robot arms into different configurations with different known gravity induced torques on the joints.

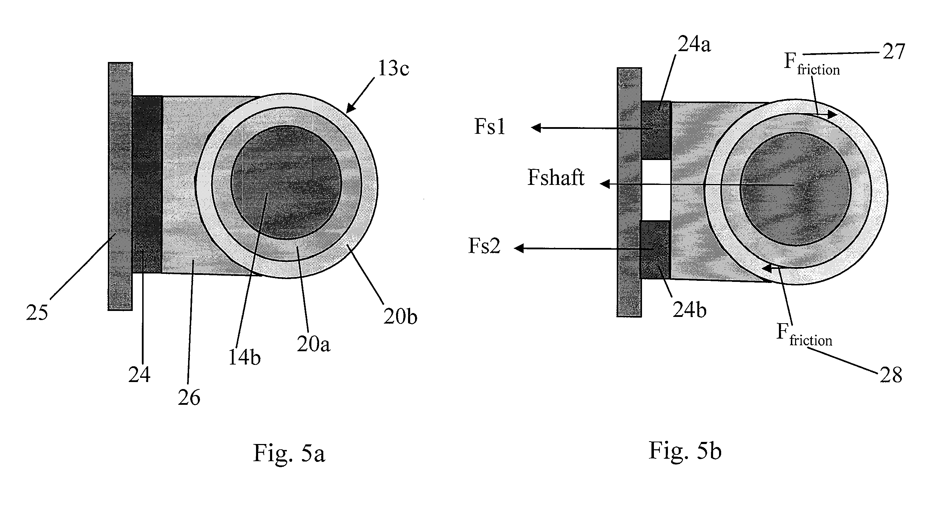

Figure 5a exemplifies how the mounting of the force sensor in Figure 4 can be made. The bearing 13c comprises a rotating part 20a connected to the shaft 14b and a static part 20b mounted on a bearing holder 26. A force sensor 24 is mounted between the static part 20b of the bearing and a component 25 in the robot arm, which holds the gear train and the motor in figures 2 - 4. The sensor is for example a strain transducer, a piezorestive transducer, a piezoelectric transducer, magnetostrictive transducer, inductive transducer, capacitive transducer, or an optical transducer.

There is a small friction (static and viscous) in the bearing giving the forces 27 and 28 parallel with the sensor measurement direction. To be able to compensate for this friction two force sensors 24a and 24b can be used according to figure 5b. The first force sensor 24a is located on a first side of the shaft 14b and the second force sensor 24b is located on an opposite side of the shaft 14b. The force Fshaft on the measured shaft 14b is calculated as the mean value of the measurements Fs1 and Fs2 from the first and second sensor 24a and 24b:

$$Fshaft= (Fs1+Fs2)/2 \qquad (4)$$

Using the formula 4 with the measured forces Fs1 and Fs2 the friction will not influence the measurement of the shaft force Fshaft.

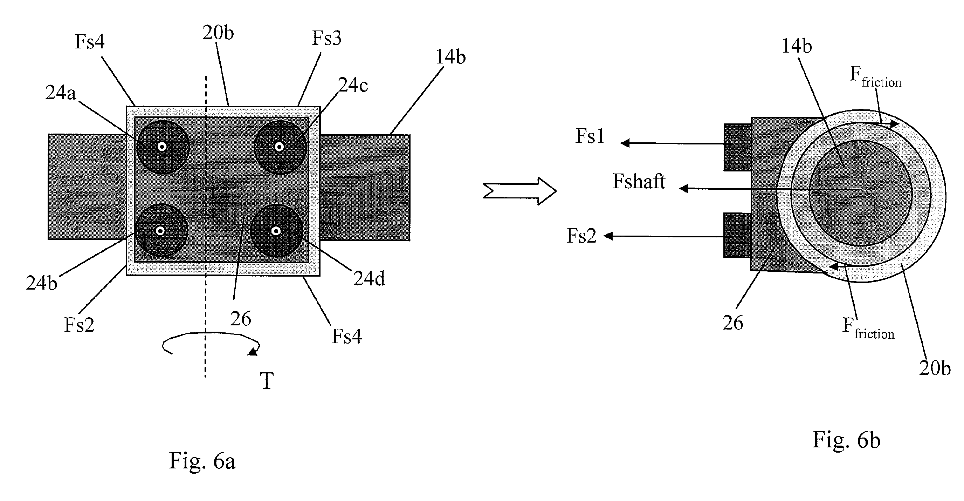

Figure 6a shows how four force sensors 24a - d can be used to both compensate for bearing friction and forces from bending of the shaft 14b. Figure 6b shows the same perspective as figure 5b, but looking from the left side on figure 6b according to the arrow it can be seen that four force sensors 24a -d are now used according to figure 6a. These are grouped in two pairs 24a - 24b and 24c - 24d along the shaft axis. The sensors 24a-d are mounted on a bearing holder 26 connected to the static part 20b of the bearing. The sensors 24a and 24b are mounted in two locations on the bearing holder 26, which locations are separated in the radial direction of the shaft 14b so that the friction components $F_{friction}$ from the bearing in the locations are in opposite directions as seen from figure 6b. The sensors 24c and 24d are also mounted separated in the radial direction of the shaft 14b, so that the friction components $F_{friction}$ from the bearing in the locations are in opposite directions. The sensors 24a and 24c, as well as the sensors 24b and 24d, are mounted separated in the axial direction of the shaft 14b so that the forces from the bending torque on the shaft are in opposite directions.

The force on the shaft is calculated according to the following formula:

$$Fshaft=((Fs1+Fs2)2 +(Fs3+Fs4)2)/2 \qquad (5)$$

where Fs1 is the force on the sensor 24a, Fs2 is the force on the sensor 24b, Fs3 is the force on the sensor 24c and Fs4 is the force on the sensor 24d. Thus, the force Fshaft on the shaft 14b is calculated as the mean value of all the forces Fs1 - Fs4. This means that forces measured by the sensors because of a bending torque T around an axis parallel to the plane in which the sensors are mounted and perpendicular to the shaft axis as well as forces from friction in the bearing, will be compensated for when using formula 5. Usually the friction force will be the same in the measurements by the sensor pair 24a - 24b as in the sensor pair 24c - 24d, which means that one of these sensor pairs can be replaced by only one sensor, of which the measurement signal is compensated with the friction force measured as the average of the difference between the sensor signals of the sensor pair in use.

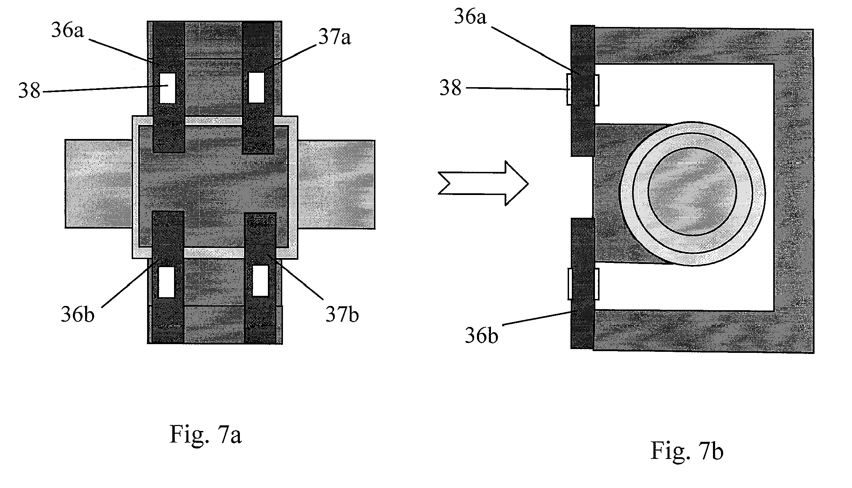

Figure 7 exemplifies how the force sensors in figure 6 can be implemented with beams 36a - 36b and 37a - 37b, on which strain gauges 38 are mounted to measure the strain of the beams. As in a well known use of strain gauges these are mounted on both sides of the beams and using electric bridge couplings the electric signals from the bridges can be calibrated to measure force. It is also possible to connect all the strain gauges on the beam pair 36a - 36b in a common bridge or make new bridge pairs of the strain gauges of 36a and 37a, and the same for 36b and 37b or any other suitable combination to obtain as simple measurement electronics as possible.

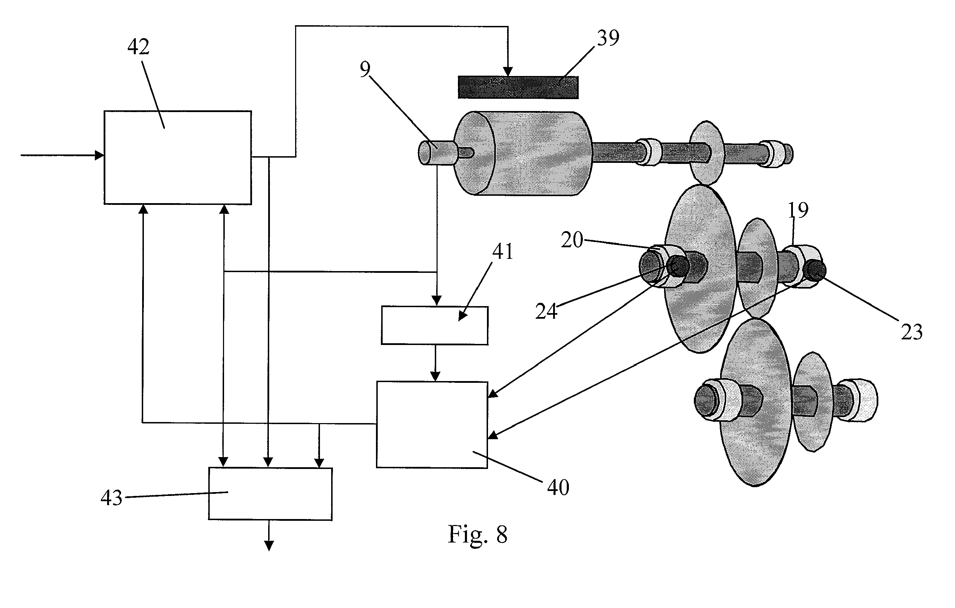

Figure 8 shows how the force sensors can be connected to a control system of the robot. The control system of the robot includes one or more processors, memory and input/output units suitable for carrying out the invention. The control system comprises a measuring unit 40, which calculates the torque on the shaft based on measurements from the force sensors and the formulas described above, and takes care of the gear ratio from the motor shaft to the measured shaft, in order to be able to generate a torque feedback signal to the control loops in a controller unit 42. The control loops control the torque, the speed and the position of the motor. Block 41 contains a table or an analytic function with identified torque ripple from the gears of the shaft that measurements are made on. The correct ripple value for the measured motor angles, measured by the angle measurement sensor 9, are used by the measuring unit 40 in order to compensate for the ripple.

In the measuring unit 40, the force sensor signals are also treated according to the previous formulas. The controller unit 42 makes use of the indirectly measured torque signal from the measuring unit 40 in different ways dependent on the robot application. Examples of control strategies using the torque measurements are impedance control, admittance control, torque control, optimized high bandwidth control, robust control and high stiffness control. The controller unit 42 generates a torque reference signal to a motor 39. The unit 43 is a residual calculator, which makes use of the redundant information from the angle measurement sensor 9 and the force sensors together with the torque reference and a dynamic robot model to observer and isolate faults.

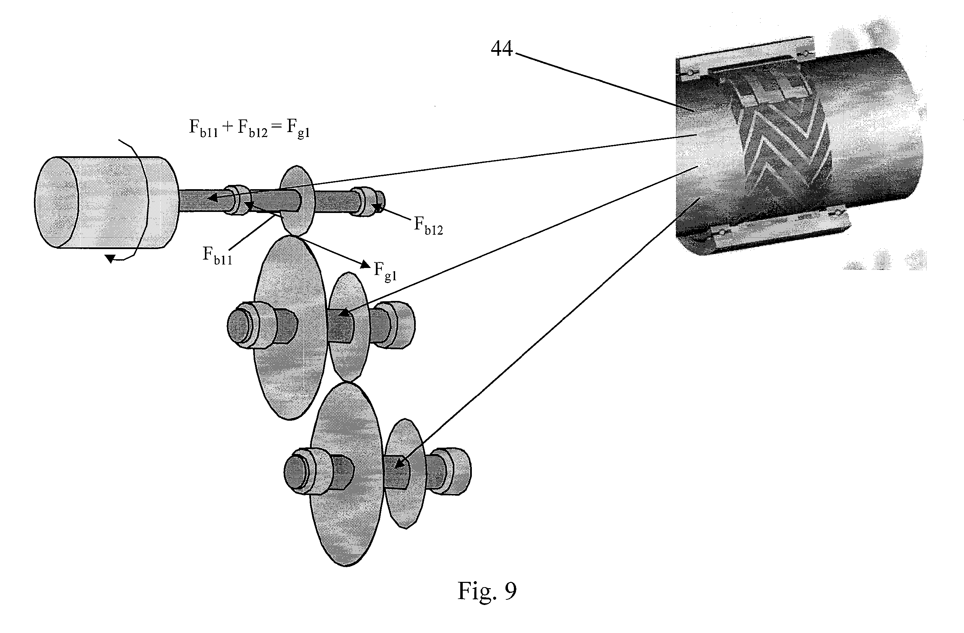

Figure 9 shows how a well known torque sensor, a torductor 44, can be mounted on one of the shafts as an alternative to the indirect torque measurement with force sensors. Insert a torductor sensor at any of the shafts that transmits a torque.

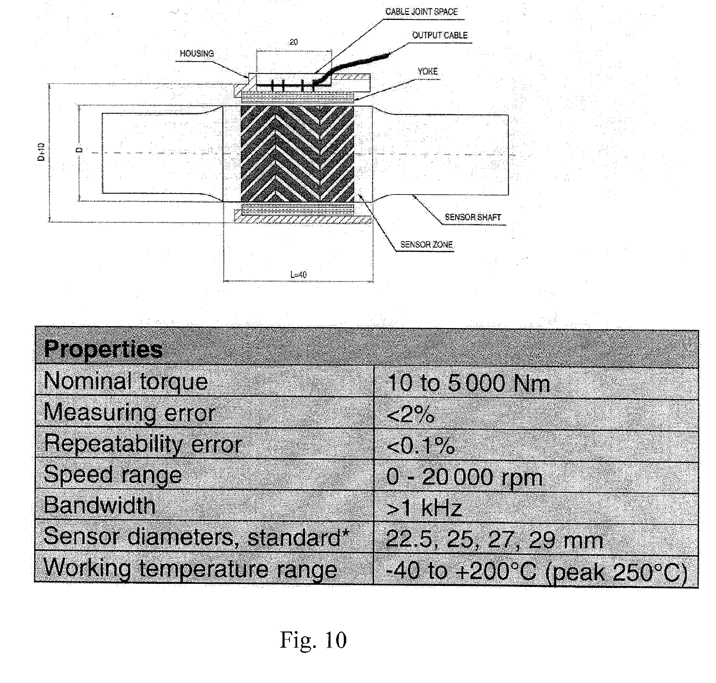

Figure 10 shows torductor properties.

The present invention is not limited to the embodiments disclosed but may be varied and modified within the scope of the following claims. For example, the force sensors can be mounted on the bearings of any of the shafts in the gear train or even on the bearings of the motor itself.

The method for torque measurement according to the invention is useful for robot control as well as for robot supervision.

**Claims**

1. A method for determining torque on a rotating shaft mounted in at least one bearing in an industrial robot, wherein the method comprises:

   - measuring the force between the bearing and its surroundings, and on basis thereof
   - calculating the torque on the shaft.

2. A method according to claim 1, wherein the rotating shaft is mounted in at least two bearings and the method comprises:

   - measuring the forces between the second bearing and its surroundings, and
   - calculating the torque on the shaft based on the sum of the measured forces on the first and second bearing.

3. A method according to claim 1 or 2, wherein said bearing comprises a rotating part connected to the rotating shaft and a static part connected to the surroundings, and the force is measured between the static part of the bearing and the surroundings.

4. A method according to claim 3, wherein the method comprises:

   - measuring the force on two locations, wherein the locations are selected such that the friction components from the bearing in the locations are in opposite directions, and
   - calculating the mean value of said measured forces for the two locations, and on basis thereof calculating the torque on the shaft.

5. A method according to claim 4, wherein the method comprises:

   - measuring the force on two locations, wherein the locations are selected such that forces from the bending torque around the shaft in the two locations are in opposite directions, and
   - calculating the mean value of said measured forces for the two locations, and on basis thereof calculating the torque on the shaft.

6. A method according to any of the previous claims, wherein the first rotating shaft is connected to a second shaft through a gear, and the method comprises:

   - calculating the torque on the second shaft based on the calculated torque on the first shaft and the gear ratio of said gear.

7. A method according to any of the previous claims, wherein the shaft is mounted in a joint in the robot and the surroundings of the shaft comprises a robot arm.

8. A method according to any of the previous claims, wherein the rotating shaft is connected to a motor and to a second shaft through a gear, and the method comprises:

   - identifying and storing the amplitudes of the torque ripple from the gear as a function of the motor angle,
   - measuring the motor angle,
   - determining the amplitude of the torque ripple from the gear based on the measured motor angle and the stored amplitudes of the torque ripple, and
   - calculating a compensated torque on the shaft based on the amplitude of the torque ripple.

9. A method according to any of the previous claims, wherein the rotating shaft is connected to a motor and a gear and the method comprises:

   - calculating the torque on the motor based on angular values from the motor, the calculated torque on the shaft and a dynamic robot model,
   - comparing the calculated the torque on the motor with a torque reference signal to the motor, and
   - on basis thereof determining faults in the motor, the gear, or the robot mechanics.

**10.** A method according to any of the previous claims, wherein the rotating shaft is connected to a motor controlled by a control loop, and the method comprises generating a torque feedback signal to said control loop based on the calculated torque.

**11.** A computer program directly loadable into the internal memory of a computer, comprising software for performing the steps of any of the claims 1 - 10

**12.** A computer readable medium, having a program recorded thereon, where the program is to make a computer perform the steps of any of the claims 1- 10, when said program is run on the computer.

**13.** A device for determining torque on a rotating shaft (14a-c) in an industrial robot, wherein the shaft is mounted in at least one bearing (13a-d), <u>**characterized in that**</u> the device comprises:

- a sensor arrangement (24a-d) for measuring the force between the bearing and its surroundings (25), and
- a measuring unit (40) adapted to receive measurements from said sensor arrangement and on basis thereof calculate the torque on the shaft.

**14.** A device according to claim 13, <u>**characterized in that**</u> said bearing comprises a rotating part (20a) connected to the rotating shaft and a static part (20b) connected to the surroundings, and that said sensor arrangement is mounted between the static part of the bearing and the surroundings.

**15.** A device according to claim 14, <u>**characterized in that**</u> the sensor arrangement comprises a beam (36a-d) mounted between the static part of the bearing and the surroundings and a sensor (38) for measuring the bending or stress of the beam.

**16.** A device according to any of the claims 13 - 15, <u>**characterized in that**</u> the shaft is mounted in a joint in the robot and the surroundings of the shaft comprises a robot arm (7).

**17.** A device according to any of the claims 13 - 16, <u>**characterized in that**</u> said bearing is mounted in a bearing holder (26) and that said sensor arrangement is mounted between the bearing holder and the surroundings.

**18.** A device according to any of the claims 13 - 17, <u>**characterized in that**</u> the rotating shaft is mounted in at least two bearings and the device comprises a second sensor arrangement for measuring the force between the second bearing and its surroundings, and that the measuring unit is adapted to calculate the torque on the shaft based on the sum of the measured forces on the first and second bearing.

**19.** A device according to any of the claims 13 - 18, <u>**characterized in that**</u> said sensor arrangement comprises two force sensors (24a-b; 24c-d) mounted in two locations on or in connection to the static part of the bearing, which locations are separated in the radial direction of the shaft so that the friction components from the bearing in the locations are in opposite directions, and said measuring unit is adapted to calculate the mean value of the signals from the force sensors and on basis thereof calculating the torque on the shaft.

**20.** A device according to any of the claims 13 - 19, <u>**characterized in that**</u> said sensor arrangement comprises two force sensors (24a-b; 24c-d) mounted in two locations on or in connection to the static part of the bearing, which locations are separated in the axial direction of the shaft so that the forces from the bending torque around the shaft in the two locations are in opposite directions, and said measuring unit is adapted to calculate the mean value of the signals from the force sensors and on basis thereof calculating the torque on the shaft.

**21.** A device according to any of the claims 13 - 20, wherein the rotating shaft is connected to a motor (8) and to a second shaft through a gear, the device comprises storage means for storing the amplitudes of the torque ripple from the gear as a function of the motor angle, and the computing unit is adapted to receive measurements of the motor angle, to determine the amplitude of the torque ripple from the gear based on the measured motor angle and the stored amplitudes of the torque ripple, and to calculate a compensated torque on the shaft based on the amplitude of the torque ripple.

**22.** A device according to any of the claims 13 - 21, wherein the rotating shaft is connected to a motor and a gear, and the device comprises a residual calculator (43) adapted to calculate the torque on the motor based on angular values from the motor, the calculated torque on the shaft and a dynamic robot model, to compare the calculated the torque on the motor with a torque reference signal to the motor, and on basis thereof determining faults in the motor, the gear or the robot mechanics.

23. A device according to any of the claims 13 - 22, wherein the rotating shaft is connected to a motor and the shaft is an input shaft (14b) to a gear train.

24. Use a device according to any of the claims 13-23 for robot control.

25. Use a device according to any of the claims 13 - 23 for robot supervision.

Fig. 1

Fig. 2

Fig. 3

Fig. 4

Fig. 5a

Fig. 5b

EP 1 696 216 A1

Fig. 6b

Fig. 6a

Fig. 7b

Fig. 7a

Fig. 8

Fig. 9

| Properties | |
|---|---|
| Nominal torque | 10 to 5 000 Nm |
| Measuring error | <2% |
| Repeatability error | <0.1% |
| Speed range | 0 - 20 000 rpm |
| Bandwidth | >1 kHz |
| Sensor diameters, standard* | 22.5, 25, 27, 29 mm |
| Working temperature range | -40 to +200°C (peak 250°C) |

Fig. 10

**European Patent Office**

**EUROPEAN SEARCH REPORT**

Application Number

EP 05 10 1460

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 193 401 A (BRIDGES ET AL) 16 March 1993 (1993-03-16) * abstract * * column 1, line 12 - column 2, line 46 * * column 4, line 7 - column 5, line 28; figures 1-4 * * column 5, line 29 - column 6, line 61; figures 5-9 * ----- | 1-25 | G01L3/00 G01L3/10 G01L3/14 G01L5/00 |
| X | DE 43 32 137 C1 (DR.-ING. GEORG WAZAU, 10589 BERLIN, DE) 9 March 1995 (1995-03-09) * abstract * * column 1, line 3 - column 2, line 61; figures 1-7 * ----- | 1-25 | |
| A | US 4 666 361 A (KITABATAKE ET AL) 19 May 1987 (1987-05-19) * abstract * * column 1, line 61 - column 2, line 62; figures 1-3 * ----- | 1-25 | |
| A | US 6 220 104 B1 (YOSHINO RYUTARO ET AL) 24 April 2001 (2001-04-24) * abstract * * column 2, line 54 - column 6, line 45; figures 1-7 * ----- | 1-25 | TECHNICAL FIELDS SEARCHED (Int.Cl.7) G01L |
| A | DE 34 20 884 A1 (DAHMS,JOACHIM; SPLIEDT,REINER) 23 January 1986 (1986-01-23) * abstract * * page 5, line 122 - page 8, line 229; figures 1-3 * ----- -/-- | 1-25 | |

The present search report has been drawn up for all claims

| Place of search | Date of completion of the search | Examiner |
|---|---|---|
| Munich | 1 September 2005 | Bergado Colina, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 05 10 1460

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 4 598 595 A (VRANISH ET AL) 8 July 1986 (1986-07-08) * abstract * * column 3, line 57 - column 5, line 47; figures 1-3 * | 1-25 | |
| A | US 5 144 846 A (KLAUBER ET AL) 8 September 1992 (1992-09-08) * abstract * * column 4, line 23 - column 6, line 49; figures 2-7 * | 1-25 | |

TECHNICAL FIELDS
SEARCHED      (Int.Cl.7)

The present search report has been drawn up for all claims

| Place of search | Date of completion of the search | Examiner |
|---|---|---|
| Munich | 1 September 2005 | Bergado Colina, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 05 10 1460

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2005

| Patent document cited in search report | | Publication date | Patent family member(s) | | Publication date |
|---|---|---|---|---|---|
| US 5193401 | A | 16-03-1993 | NONE | | |
| DE 4332137 | C1 | 09-03-1995 | NONE | | |
| US 4666361 | A | 19-05-1987 | JP | 60186384 A | 21-09-1985 |
| US 6220104 | B1 | 24-04-2001 | JP | 10286789 A | 27-10-1998 |
| DE 3420884 | A1 | 23-01-1986 | NONE | | |
| US 4598595 | A | 08-07-1986 | NONE | | |
| US 5144846 | A | 08-09-1992 | US | 4939937 A | 10-07-1990 |
| | | | AU | 620135 B2 | 13-02-1992 |
| | | | AU | 4035589 A | 19-02-1990 |
| | | | BR | 8907571 A | 18-06-1991 |
| | | | CN | 1039483 A | 07-02-1990 |
| | | | EP | 0352187 A1 | 24-01-1990 |
| | | | EP | 0430977 A1 | 12-06-1991 |
| | | | JP | 4500118 T | 09-01-1992 |
| | | | WO | 9001152 A1 | 08-02-1990 |
| | | | US | 4979399 A | 25-12-1990 |

EPO FORM P0459

For more details about this annex : see Official Journal of the European Patent Office, No. 12/82